(19) Europäisches Patentamt / European Patent Office / Office européen des brevets

(11) **EP 2 932 166 B1**

(12) **EUROPÄISCHE PATENTSCHRIFT**

(45) Veröffentlichungstag und Bekanntmachung des Hinweises auf die Patenterteilung:
**14.06.2017 Patentblatt 2017/24**

(21) Anmeldenummer: **13821455.6**

(22) Anmeldetag: **16.12.2013**

(51) Int Cl.:
*F24H 4/04* (2006.01)     *B60H 1/00* (2006.01)
*F24H 7/04* (2006.01)     *F24D 11/02* (2006.01)
*F28D 20/00* (2006.01)

(86) Internationale Anmeldenummer:
**PCT/EP2013/076746**

(87) Internationale Veröffentlichungsnummer:
**WO 2014/091033 (19.06.2014 Gazette 2014/25)**

(54) **WÄRME- UND KÄLTEBEREITSTELLUNGSVORRICHTUNG**

HOT AND COLD TEMPERATURE SUPPLY DEVICE

DISPOSITIF DE PRODUCTION DE CHALEUR ET DE FROID

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.12.2012 DE 102012112347**

(43) Veröffentlichungstag der Anmeldung:
**21.10.2015 Patentblatt 2015/43**

(73) Patentinhaber: **Hahn, Thomas**
**61137 Schöneck (DE)**

(72) Erfinder: **Hahn, Thomas**
**61137 Schöneck (DE)**

(74) Vertreter: **Katscher Habermann Patentanwälte**
**Dolivostraße 15A**
**64293 Darmstadt (DE)**

(56) Entgegenhaltungen:
**EP-A2- 0 660 055     WO-A1-81/00447**
**WO-A2-2009/049612     DE-A1- 2 604 942**
**DE-A1- 2 741 507**

## Beschreibung

Die Erfindung betrifft eine Wärme- und Kältebereitstellungsvorrichtung gemäß dem Oberbegriff des Anspruchs 1. Eine solche Vorrichtung ist z.B. aus der DE 27 41 507 A1 bekannt. Begriffsdefinition für die Begriffe Kreisprozessanlage, Arbeitsstoff und Wärmeträgermedium:

Der Begriff Kreisprozessanlage bezeichnet hier alle Kältekreisprozesse sowie andere thermische Kreisprozesse, welche beispielsweise mittels eines Gases betrieben werden. Kältekreisprozesse umfassen hier alle linkslaufenden Kreisprozesse, bei welchen die Verdichtung mechanisch oder thermisch erfolgt. Dazu zählen Kältekreisprozesse mit einem Arbeitsstoff wie beispielsweise Wärmepumpen und Kühlaggregate sowie thermisch verdichtete Absorptionskreisprozesse oder Diffusionsabsorptionsprozesse, weiterhin auch Adsorptionskreisprozesse und Wärmerohre. Darüber hinaus umfasst der Begriff Kreisprozessanlage hier auch rechtslaufende Kreisprozesse wie Beispielsweise den Stirlingkreisprozess.

Der Begriff Arbeitsstoff umfasst hier alle Fluide wie beispielsweise die Kältemittel und die Arbeitsgase, die als Arbeitsmedium in der Kreisprozessanlage verwendet werden. Das sind Beispielsweise die Kältemittel im Kältekreisprozess oder das Gas in einem Stirlingkreisprozess.

Der Begriff Wärmeträgermedium umfasst alle Fluide und gegebenenfalls Festkörper, die als Wärmespeichermedium in einem Wärmespeicherbehälter oder in zu- und abführenden Leitungen und als Wärmetransportmedium in einem Wärmeaustauschsystem mit Leitungen verwendet werden können.

Solche Wärme- und Kältebereitstellungsvorrichtungen werden zur Erzeugung und Bereitstellung von Nutzkälte oder Nutzwärme verwendet. Beispielsweise ist es bekannt, das Wärmeträgermedium mittels geeigneter externer Wärmequellen in dem Innenraum des Speicherbehälters zu erwärmen und die Wärmeenergie des Wärmeträgermediums in dem Speicherbehälter zu speichern. Zu diesem Zweck weisen herkömmliche Speicherbehälter häufig eine Wärmedämmung auf. Derartige Speicherbehälter werden auch Schichtenspeicher genannt, da das Wärmeträgermedium in dem Speicherbehälter unterschiedliche Temperaturen aufweist und sich entsprechend der temperaturabhängigen Dichte in übereinander angeordneten Schichten gleicher Temperatur anordnet. Die Temperatur des Wärmeträgermediums nimmt von unten nach oben kontinuierlich zu, wobei die Temperatur des Wärmeträgermediums in horizontalen Schichten jeweils weitgehend homogen ist.

Auf Grund der temperaturabhängigen Schichtung des Wärmeträgermediums kann Wärmeenergie unterschiedlicher Temperatur besonders effizient in das Wärmeträgermedium eingebracht werden und Wärmeenergie unterschiedlicher Temperatur aus dem Wärmeträgermedium einfach entnommen werden. Eine solche Wärme- und Kältebereitstellungsvorrichtung kann daher zur Erzeugung und Speicherung von Nutzwärme oder Nutzkälte innerhalb des Schichtenspeichers eingesetzt werden.

Beispielsweise kann das Wärmeträgermedium in einem oberen Bereich des Speicherbehälters mit Hilfe geeigneter Wärmetauscher auf eine ausreichend hohe Temperatur erhitzt werden, um als Brauchwasser genutzt zu werden. Mit Hilfe des niedriger temperierten Wärmeträgermediums darunter liegender Schichten kann zum Beispiel eine Niedrigtemperatur-Heizvorrichtung mit Wärmeenergie versorgt werden. Es ist beispielsweise auch möglich, aus niedrig temperierten Schichten mit Hilfe geeigneter Wärmetauscher Nutzkälte für den Betrieb einer Klimaanlage oder einer Kühleinrichtung mit Hilfe der Wärme- und Kältebereitstellungsvorrichtung zu erzeugen und aus dem Speicherbehälter zu entnehmen.

Um Wärmeenergie in den Schichtenspeicher bzw. in den Speicherbehälter einzubringen ist es beispielsweise bekannt, Wärmeenergie mit Hilfe von thermischen Solarkollektoren oder geothermischen Wärmequellen in das Wärmeträgermedium einzubringen. Generell können beliebige Wärmequellen über geeignete und innerhalb des Speicherbehälters angeordnete Wärmetauscher in die Wärme- und Kältebereitstellungsvorrichtung eingebunden werden. Auf diese Weise ist es einfach möglich, unterschiedliche Vorrichtungen zur Erzeugung und Nutzung von Wärmeenergie mit Hilfe der Wärme- und Kältebereitstellungsvorrichtung zu betreiben, wobei diese Vorrichtungen unterschiedliche Kreisprozesse aufweisen können.

Um möglichst effizient Wärmeenergie in den Speicherbehälter einbringen zu können und innerhalb des Speicherbehälters Wärmeenergie mit den erforderlichen Temperaturen bereitstellen zu können ist es bekannt, dem Wärmeträgermedium in dem unteren Bereich des Speicherbehälters durch Abkühlung Wärme zu entziehen und diese Wärme in den oberen Bereich des Speicherbehälters in das Wärmeträgermedium einzubringen. Auf diese Weise wird die Temperatur des Wärmeträgermediums in dem unteren Bereich des Speicherbehälters weiter erniedrigt, so dass beispielsweise Nutzkälte effizienter aus dem Speicherbehälter entnommen werden kann oder Wärmeenergie geringerer Temperatur effizienter in den Schichtenspeicher eingebracht werden kann. Gleichzeitig wird durch die Umverteilung Wärmeenergie höherer Temperatur in dem oberen Bereich des Speicherbehälters bereitgestellt.

Zur Umverteilung der Wärmeenergie in dem Speicherbehälter werden Komponenten von Kreisprozessanlagen wie z.B. Wärmepumpen innerhalb des Speicherbehälters angeordnet. Beispielsweise können ein Verdampfer und ein Kondensator einer Wärmepumpe innerhalb des Speicherbehälters angeordnet werden und mit Hilfe der Wärmepumpe die Wärmeenergie umverteilt werden.

Bei den herkömmlichen Wärmepumpen werden als Arbeitsstoff häufig vollständig halogenierte Fluorkohlenwasserstoffe (FKW) oder teilhalogenierte Fluorkohlenwasserstoffe (H-FKW) eingesetzt. Diese mit Fluor halogenierten Kohlenwasserstoffe (FKW und H-FKW) haben kein Ozonabbaupotenzial (ODP) in der Erdatmosphäre wie etwa FCKW. Dennoch wird das Klima beeinflusst. Die FKWs und H-FKWs tragen nach dem gleichen Prinzip wie Kohlenstoffdioxid ($CO_2$) zum Treibhauseffekt bei. Die langwellige Strahlung von der Erde in den Weltraum wird durch FKWs und H-FKWs in den oberen Schichten der Atmosphäre teilweise reflektiert und bleibt innerhalb der Erdatmosphäre.

Die FKWs und H-FKWs haben eine lange Verweildauer in der Atmosphäre: Zwischen 2 und 250 Jahren. Das Global-Warming-Potential (GWP) einzelner fluorierter Kohlenwasserstoffe liegt um den Faktor 100 - 15000 über dem von Kohlenstoffdioxid. Beispielsweise hat der in beinahe allen Kraftfahrzeugklimaanlagen verwendete Arbeitsstoff R134a ($C_2H_2F_4$) einen GWP-Wert von 1300.

Fluorchlorkohlenwasserstoffe (FCKWs) können mit Chlor und Brom halogenierte Kohlenwasserstoffe sein. Fluorchlorkohlenwasserstoffe FCKWs sind als Frigen oder Frion bekannt. FCKWs tragen direkt zum Abbau der Ozonschicht bei. Das Zerstörungspotenzial (Ozon-Deplating-Potential) gegenüber der Ozonschicht in 15 bis 40 km Höhe wird hauptsächlich durch das Chlor verursacht. Infolge einer Reduktion der Ozonschicht kommt es zu höheren Einstrahlungen von UV-B. Diese Strahlung ist zellschädigend mit negativen Auswirkungen auf Lebewesen und Pflanzen. Seit dem Jahr 2000 sind FCKs bei Neugeräten verbotene Arbeitsstoffe (Kältemittel). Trotz des Verbots bei Neugeräten werden sie in einigen Ländern weiterhin eingesetzt.

Um die schädlichen Umwelteinflüsse dieser Arbeitsstoffe zu vermeiden, könnten alternative Arbeitsstoffe wie beispielsweise natürliche Arbeitsstoffe (Kältemittel) wie Ammoniak, Dimethyläther, Iso-Butan, Propan, $CO_2$ sowie Mischungen wie Ammoniak-Dimethyläther und andere eingesetzt werden. Zudem haben solche Arbeitsstoffe gegenüber den häufig verwendeten FKWs und H-FKWs einen Effizienzvorteil. Allerdings ist die technische Anwendung solcher Arbeitsstoffe nicht einfach.

Beispielsweise wird Ammoniak auf Grund seiner Toxizität nicht in Geräten eingesetzt welche in geschlossenen Räumen betrieben werden. Ausnahmen sind Kleinkühlschränke welche mit Ammoniak - Wasser Absorptionskreisprozessen betrieben werden. NH3 gilt nach der Gefahrstoffverordnung Anhang II als gasförmiger Gefahrenstoff.

Propan und Butan sind leicht entzündlich und die Verwendung von $CO_2$ im transkritischen Bereich bedingt hohe Drücke im Kältekreislauf. Im Fall von Leckagen bzw. Schäden an Leitungen oder anderen Komponenten der Kreisprozessanlagen bzw.

Wärmepumpen kann beispielsweise giftiges Ammoniak, brennbares Butan oder Propan austreten. Kreisprozessanlagen mit größeren Mengen dieser Arbeitsstoffe werden derzeit nicht in geschlossenen oder bewohnten Gebäuden betrieben. Beispielsweise ist auch $CO_2$, welches in einem Kellerraum austritt, giftig. Konzentrationen über 8 % in der Atemluft sind tödlich. Beispielsweise bedingt der Einsatz von Ammoniak als Arbeitsstoff die belüftete Aufstellung bzw. die Aufstellung der Kreisprozessanlagen im Freien. Ammoniak ist in größeren meist im Freien stehenden Kälteanlagen ein häufig verwendeter Arbeitsstoff.

Ammoniak bildet mit Wasser eine basisch reagierende Lösung. $NH_3 + H_2O \rightarrow NH_4^+ + OH^-$. Ammoniak verbreitet einen stechenden Geruch der bereits in sehr geringen Konzentrationen (5 ppm), weit unterhalb der maximalen Arbeitsplatzkonzentration von 50 ppm, wahrgenommen wird. Ammoniak gehört zu der Sicherheitsgruppe B2, zur Brandklasse C und zur Explosionsgruppe II A.

Als Aufgabe der Erfindung wird es angesehen, eine Wärme- und Kältebereitstellungsvorrichtung anzubieten, bei der eine Umverteilung der Wärmeenergie innerhalb des Speicherbehälters mit einer Kreisprozessanlage erreicht wird, welche mit einem giftigen, leicht entzündlichen oder unter hohem Druck stehenden Arbeitsstoff betrieben wird.

Diese Aufgabe wird durch eine Wärme- und Kältebereitstellungsvorrichtung gemäß Anspruch 1 gelöst. Zu diesem Zweck kann vorgesehen sein, dass eine Druckfestigkeit des Speicherbehälters an den verwendeten Arbeitsstoff angepasst ist. Erfindungsgemäß sind sämtliche Komponenten der Kreisprozessanlage, die den Arbeitsstoff beinhalten, in dem Innenraum angeordnet. Sollte eine Leckage in einer Leitung oder in einer anderen Komponente der innerhalb des Speicherbehälters vollständig angeordneten Kreisprozessanlage auftreten, so strömt der austretende Arbeitsstoff in den Speicherbehälter und wird nicht an die Umgebung abgegeben. Auf diese Weise können auch giftige und leicht entzündliche Arbeitsstoffe für den Betrieb der innerhalb des Speicherbehälters angeordneten und zur Umverteilung von Wärmeenergie innerhalb des Speicherbehälters eingesetzten Kreisprozessanlage verwendet werden, wobei auch im Schadensfall eine Gefährdung durch Austreten des Arbeitsstoffes wirksam vermieden wird. Austretender Arbeitsstoff wird in dem Speicherbehälter aufgefangen.

Auf diese Weise kann erfindungsgemäß auch zwar giftiges, aber sehr effizientes und nicht klimaschädliches Ammoniak als Arbeitsstoff in der Kreisprozessanlage auch bei Anwendung in Gebäuden bzw. Wohngebäuden eingesetzt werden. Ammoniak besitzt eine sehr große spezifische Verdampfungsenthalpie. Deshalb können mit Ammoniak betriebene Kreisprozessanlagen bei gleicher Leistung mit kleineren Mengen des Arbeitsstoffes betrieben werden. Zudem ist Ammoniak umweltneutral und ohne karzinogene Wirkung.

Neben den sogenannten "natürlichen Kältemitteln" sind auch auf Fluor-Kohlenwasserstoffen basierende, neu entwickelte Arbeitsstoffe wie beispielsweise HFO-1234YF toxisch und sehr feuergefährlich. Dieser Arbeitsstoff soll künftig in PKWs eingesetzt werden.

Durch die erfindungsgemäße Wärme- und Kältebereitstellungsvorrichtung wird auch ein sicherer Betrieb von Kreisprozessanlagen mit solchen neuentwickelten Arbeitsstoffen ermöglicht. Es können innerhalb des Speicherbehälters auch mehrere Kreisprozessanlagen z.B. Wärmepumpen beispielsweise übereinander angeordnet sein. Auf diese Weise können die einzelnen Wärmepumpen mit niedrigeren Temperaturhüben betrieben werden, wodurch jede einzelne Wärmepumpe mit höherer Effizienz betrieben werden kann.

Durch die Umverteilung der Wärmeenergie innerhalb des Speicherbehälters können mit Hilfe der erfindungsgemäßen Wärme- und Kältebereitstellungsvorrichtung beispielsweise Klimaanlagen, Kälteanlagen und andere beliebige Vorrichtungen zur Nutzung bzw. Bereitstellung von Wärmeenergie bei vergleichsweise niedrigen Temperaturhüben und somit besonders effizient betrieben werden, die Effizienz steigert sich insbesondere im Teillastbetrieb, einer über lange Zeiträume im Jahr vorherrschenden Betriebsart. Die Auslegung von Kälteanlagen und Wärmepumpen richtet sich nach dem möglichem Temperaturspektrum welches in seinen Extremwerten nur an wenigen Tagen im Jahr erreicht wird.

Zur Beurteilung der Effizienz von Kreisprozessanlagen bzw. Wärmepumpen wird die sogenannte Leistungszahl oder COP (Coefficient of Performance) bestimmt. Überschlägig lässt sich das Verhältnis von Leistungszahl (COP) und Temperaturhub charakterisieren mit "halber Temperaturhub entspricht doppeltem Ertrag". Dies gilt für übliche Temperaturbereiche zur Klimatisierung und Heizung.

Der COP für eine Wärmepumpe wird ermittelt über den Carnot-Wirkungsgrad. Dieser Carnot-Wirkungsgrad ist mit dem Faktor des Gütegrades der Wärmepumpe zu korrigieren. Durchschnittlich liegt der Gütegrad, welcher die realen Verluste des Kreisprozesses der Wärmepumpe angibt, bei etwa 50 % der eingesetzten Energie. Diese Verluste sind im Wesentlichen mechanische und thermische Verluste sowie Strömungsverluste und Verluste im Arbeitsstoff.

$$\varepsilon_{wp} = 1/\eta_c = T_{warm} \; / \; (T_{warm} - T_{kalt}) \; \times \; 0,5 \; (\text{Absolut Werte in Kelvin})$$

Die Effizienz beliebiger Kreisprozessanlagen ist analog zu ermitteln.

Durch die Anordnung mehrerer Kreisprozessanlagen (z.B. Wärmepumpen) innerhalb des Speicherbehälters und die dadurch erreichte Effizienzsteigerung infolge der niedrigeren erforderlichen Teiltemperaturhübe bei gleichzeitig verhinderten Wärmeverlusten kann mit Hilfe der erfindungsgemäßen Wärme- und Kältebereitstellungsvorrichtung nutzbare Wärmeenergie besonders effizient bereitgestellt werden.

Bei herkömmlichen Anlagen wird zur Kaskadierung mehrerer Kreisprozessanlagen bzw. Wärmepumpen ein Kondensator einer ersten Kreisprozessanlage mit einem Verdampfer einer zweiten Kreisprozessanlage, beispielsweise mit Hilfe eines Gegenstromwärmetauschers, gekoppelt. Das bedingt, dass gekoppelte Kreisprozessanlagen immer gleichzeitig betrieben werden müssen. In der Praxis ist die Auslegung solcher Anlagen sehr komplex und fehleranfällig. Daher werden auf diese Weise gekoppelte Anlagen höchst selten angeboten. Derzeit werden beispielsweise Wärmepumpenkaskaden angeboten, welche aber nicht aus einer wie hier beschriebenen Kaskade bestehen, sondern aus zwei oder mehreren eigenständigen Wärmepumpen, welche nacheinander parallel eingesetzt werden. Diese Wärmepumpen führen dabei immer den gleichen Gesamttemperaturhub aus. Der Kaskadenbegriff wird hier als optionale Parallelschaltung verstanden. Das zeigt, dass die hier gegenständliche Variante einer eigentlichen Kaskade in der Praxis gar nicht wahrgenommen wird.

Die erfindungsgemäße Wärme- und Kältebereitstellungsvorrichtung ermöglicht die Kaskadierung von unterschiedlichen Wärmepumpen bzw. Kreisprozessanlagen, wobei der Gesamttemperaturhub auf einzelne Kreisprozessanlagen aufgeteilt werden kann. Beispielsweise kann in einer ersten Kreisprozessanlage der Temperaturhub von -5°C auf +30°C erfolgen und in einer zweiten oberhalb der ersten Kreisprozessanlage angeordneten Kreisprozessanlage ein Temperaturhub von +25°C auf +50°C erfolgen. Es können mehrere innerhalb des Speicherbehälters angeordnete Kreisprozessanlagen gleichzeitig oder einzeln betrieben werden.

Die erfindungsgemäße Wärme- und Kältebereitstellungsvorrichtung ermöglicht im Einsatz zur Kälteerzeugung den Betrieb mit toxischen oder gefährlichen Arbeitsstoffen bei gleichzeitiger Nutzung von freier Kühlung innerhalb der Bandbreite der Temperatur des in dem Speicherbehälter gelagerten Wärmeträgermediums. Gleichzeitig kann mittels eines Wärmetauschers auf einfache Weise im Bedarfsfall Wärme als Nutzwärme aus dem Speicherbehälter entzogen werden. Beispielsweise ist eine solche Lösung einfach und kostengünstig bei der Kühlung von Lebensmitteln und dem gleichzeitigen Heizungsbedarf etwa in Lebensmittelmärkten einsetzbar.

Durch die Ausgestaltung der erfindungsgemäßen Wärme- und Kältebereitstellungsvorrichtung, bei der die in dem Innenraum angeordneten Komponenten der Wärmepumpe vollständig von dem Wärmeträgermedium umschlossen sind, ergibt sich zwangsläufig der Vorteil, dass alle Wärmeverluste wie Beispielsweise die Abwärme des Kältekreiskompressors innerhalb des Speicherbehälters anfallen und in dem Wärmeträgermedium gespeichert zur Nutzung bereit stehen. Dadurch werden die Verlustleistungen der Wärmepumpe erheblich verringert.

Um einen möglichst sicheren Betrieb der erfindungsgemäßen Wärme- und Kältebereitstellungsvorrichtung zu ermöglichen ist vorgesehen, dass das Wärmeträgermedium Bestandteile zur Bindung, zur Umwandlung oder Neutralisierung des Arbeitsstoffes aufweist.

An dem Beispiel des Arbeitsstoffes Ammoniak werden die erfindungsgemäßen Schritte erläutert. Das Wärmeträgermedium besteht zu einem großen Anteil aus Wasser, wobei das Wasser in Falle eines Schadens das aus den Kreisprozessanlagen austretende Ammoniak absorbiert. Ein weiterer Anteil des Wärmeträgermediums kann zudem aus Essigsäure bestehen, welche mit dem austretenden Ammoniak reagiert und ungefährliches Ammoniumacetat ($CH_3$-$COONH_4$) bildet.

Auf diese Weise erfüllt das Wärmeträgermedium neben der Bereitstellung von Wärmeenergie auf unterschiedlichen Temperaturniveaus auch die zusätzliche Funktion, austretende Arbeitsstoffe abzubauen oder zu absorbieren. Erfindungsgemäß kann das Wärmeträgermedium Reaktionsmittel, Reduktionsmittel, Bindemittel, chemische Komplexbildner oder andere funktionale Stoffe aufweisen. Es ist auch möglich, dass das Wärmeträgermedium Emulsionen oder Mischungen verschiedener der vorangehend bezeichneten Komponenten aufweist.

Ein solches multifunktionales Wärmeträgermedium ist wesentlicher Bestandteil der erfindungsgemäßen Wärme- und Kältebereitstellungsvorrichtung. Das multifunktionale Wärmeträgermedium erlaubt einen gefahrlosen Betrieb von Kreisprozessanlage wie z.B. Wärmepumpen auch mit gefährlichen oder toxischen Arbeitsstoffen.

Durch den Zusatz von Latentspeichermaterial sogenannten Phasenwechselmaterialen zum Wärmeträgermedium wird gleichzeitig die volumenspezifische Wärmespeicherkapazität erhöht.

Durch die Möglichkeit mit geeignetem Latentspeichermaterial wie Beispielsweise Paraffin die Wärmekapazität in vorbestimmten Temperaturbereichen innerhalb des Speicherbehälters zu erhöhen ist die Kopplung und Regelung von zwei oder mehreren Kreisprozessanlagen bzw. Wärmepumpen einfacher und effizienter. Beispielsweise können die gekoppelten Kreisprozessanlagen in Bereichen ihres jeweils optimalen Kennfeldes länger betrieben werden. Dazu wird gezielt im Bereich der Verdampfer- oder Kondensatortemperatur zusätzlich Speicherkapazität durch den Phasenwechsel zur Verfügung gestellt. Es können auch mehrere Kreisprozessanlagen mittels toxischer, feuergefährlicher oder anderweitig gefährlicher Arbeitsstoffe betrieben werden.

Ein besonders sicherer Betrieb der erfindungsgemäßen Wärme- und Kältebereitstellungsvorrichtung wird dadurch ermöglicht, dass ein Anteil der Bestandteile an dem Wärmeträgermedium so bemessen ist, dass der in der Kreisprozessanlage enthaltene Arbeitsstoff vollständig von den Bestandteilen gebunden oder umgewandelt wird. Zu diesem Zweck sind die dem Wärmeträgermedium beigefügten Bestandteile zur Bindung oder Umwandlung der in der Kreisprozessanlage eingesetzten Arbeitsstoffe auf diese Arbeitsstoffe abzustimmen. Dabei sind die jeweiligen Mengenverhältnisse der Bestandteile so zu bemessen, dass im Schadensfall aus den Arbeitsstoff führenden Bauteilen der Kreisprozessanlage austretender Arbeitsstoff, innerhalb des Speicherbehälters gebunden und umgewandelt werden kann.

Diese Bindungs- ; Absorptions-; oder Umwandlungsfunktion der erfindungsgemäßen Wärme- und Kältebereitstellungsvorrichtung ist aus Sicherheitsgründen unter allen möglichen Betriebszuständen der Wärme- und Kältebereitstellungsvorrichtung auch bei unterschiedlichen Temperaturen und Druckverhältnissen innerhalb des Speicherbehälters zu erreichen.

Um beispielsweise eine druckerhöhende Wirkung im Schadensfall austretender Gase zu vermindern, ist vorgesehen, den Speicherbehälter immer zu einem vorbestimmten Anteil mit dem Wärmeträgermedium gefüllt sein muss. Dazu sind Sensoren oder Füllstandsgeber vorzusehen.

Zudem muss der Speicherbehälter so ausgelegt werden, dass durch exotherme chemische Reaktionen während eines Schadenfalls entstehende Reaktionswärme aufgenommen werden kann. Als Beispiel wird hier wieder Ammoniak genannt. Die Lösungsenthalpie des Ammoniaks bei 25 Grad Celsius beträgt - 30,64 kJ/mol. Beispielsweise werden bei der Absorption von 17 Gramm Ammoniak in Wasser 30 kJ Wärmeenergie frei. Bei 3000 Gramm Ammoniak sind es 5294 kJ das entspricht ca. 1,5 kWh. Bestehende Vorschriften nach der DIN EN 378-1 Tab. E1 beschreiben umfangreiche Vorschriften und Sicherungsmaßnahmen für mit Ammoniak betriebene Kreisprozesse mit einer Ammoniakfüllmenge von mehr als 3000 Gramm. Schon bei einer Füllmenge von 2000 Gramm gelten sogenannte Grundpflichten der Störfallverordnung. Für mehr als 3000gr. Ammoniak Füllmenge gelten strenge Vorschriften für den Aufstellort, die Lüftung, die Notfalllüftung, die Rohrleitungen; die Fluchtwege; die Feuerbeständigkeit und die Druckentlastung. Darüber hinaus sind Überwachungs- und Sicherheitseinrichtungen; Wartungsvorschriften sowie Notfall Ausrüstungen vorgeschrieben.

Die Erfindungsgemäße Auslegung der Wärme- und Kältebreistellungsvorrichtung beinhaltet die Dimensionierung der Komponenten in bestimmten Größenverhältnissen. Diese betreffen vorwiegend die Dimensionierung der Kreisprozesse der Größe des Speicherbehälters sowie dem Volumen und der Bestandteile des multifunktionalen Wärmeträgermediums. In dem hier betrachteten Beispiel mit Ammoniak als Arbeitsstoffe muss unter allen Betriebsbedingungen im Schadensfall erreicht werden, dass innerhalb des Speicherbehälters aus den Kreisprozessen austretendes Ammoniak vollständig absorbiert oder umgewandelt wird.

Vorzugsweise kann der Speicherbehälter "drucklos" ausgeführt werden. Der Wärmeaustausch erfolgt dabei vollständig über Wärmetauscher, ohne dass das Wärmeträgermedium den Speicherbehälter verlässt. Zudem ist ein Restvolumen im Speicherbehälter zur thermischen Ausdehnung vorgesehen.

Für die Bindung von Ammoniak durch Absorption in besonderen Maschinenräumen gibt es Vorschriften die ein maximales Mengenverhältnis von Ammoniak zu Wasser von 0,12 zulassen (BGV D4 § 17.1). Das Wasser ist in diesem Zusammenhang in einem offenen Behälter neben den Kältemaschinen gelagert welcher die Funktion einer Sicherungseinrichtung übernimmt.

Beispielsweise könnten nach dieser Vorschrift in einen erfindungsgemäßen Speicherbehälter mit 500 Liter Wasseranteil im Wärmespeichermedium maximal ca. 60 kg Ammoniak in dieser Wassermenge sicher absorbiert werden.

Eine erfindungsgemäße Vorrichtung stellt aufgrund der weiteren Funktionsanforderungen jedoch in der Regel ein wesentlich besseres Verhältnis von Wasseranteil zu Arbeitsstoff zur Verfügung. Beispielsweise maximal 3 kg Ammoniak innerhalb eines Wasseranteils im Wärmespeichermedium von 500 kg.

Die Löslichkeit von Ammoniak in Wasser sinkt bei steigender Temperatur erstaunlich stark ab. Bei einem Bar Druck und einer Temperatur von 20 Grad Celsius können 500gr. Ammoniak in 1000gr. Wasser gelöst werden das entspricht etwa 700 Liter Ammoniakgas in 1 Liter Wasser. Schon bei einer Temperatur von 70 Grad Celsius und gleichem Druck können nur noch 200 gr Ammoniak in 1000 gr Wasser gelöst werden. Bei 100 Grad Celsius können nur noch 75 gr. Ammoniak in 1000 gr. Wasser gelöst werden. Es ist vorgesehen im Schadensfall auftretende Reaktionswärme im Wasseranteil auch durch Latentspeichermaterial (PCM) als Bestandteil des Wärmeträgers aufzunehmen und zu speichern.

Wie oben beschrieben dient das Latentspeichermaterial zu Erhöhung der Speicherkapazität und gleichzeitig zur Optimierung der Kreisprozessanlagen. Beispielsweise ist in diesem Temperaturbereich Paraffin ein geeignetes PCM Material. Zudem ist Paraffin chemisch beinahe innert und daher unkritisch in Bezug auf den im Schadensfall möglichen Kontakt mit dem Arbeitsstoffe.

Vorteilhafterweise ist weiterhin vorgesehen mit weiteren PCM Materialien Wärmespeicherkapazität welche einen Phasenwechsel auf einem höheren Temperaturniveau vollziehen einzusetzen. Diese zusätzlichen Materialien sind passiver Bestandteil des Wärmeträgermediums bis es nach einem Schadensfall zu einer Temperaturerhöhung durch Absorptionswärme oder andere exotherme Reaktionen mit den Arbeitsstoffen kommt. Erst dann kommt es zum Phasenwechsel und der Wärmeenergiespeicherung. Geeignete Materialien sind Beispielsweise Speichersalze bzw. Salzhydrate oder andere Materialien mit Schmelzpunkten um etwa 80 bis 100 Grad Celsius. Diese weiteren Bestandteile des Wärmeträgermediums stellen eine Sicherheitseinrichtung zur Aufnahme der Wärme aus exothermen Reaktionen der beteiligten Stoffe dar.

Vorteilhafterweise ist vorgesehen, dass es sich bei dem Arbeitsstoff um Ammoniak oder Kohlendioxyd oder einen reinen Kohlenwasserstoff handelt. Als reiner Kohlenwasserstoff kann beispielsweise Propan, Butan oder Propylen als Arbeitsstoff eingesetzt werden. Auf diese Weise ist ein besonders effizienter Betrieb der Kreisprozessanlage innerhalb des Speicherbehälters möglich.

Vorteilhafterweise ist vorgesehen, dass das Wärmeträgermedium aus verschiedenen Komponenten besteht. Auf diese Weise können beispielsweise innerhalb des Speicherbehälters mehrere Wärmepumpen angeordnet werden, wobei die einzelnen Wärmepumpen auch mit unterschiedlichen, giftigen oder leicht entzündlichen Arbeitsstoffen betrieben werden, wobei die dem Wärmeträgermedium zugesetzten Komponenten zur Bindung oder Umwandlung der verschiedenen Arbeitsstoffe angepasst sind.

Vorteilhafterweise ist vorgesehen, dass das Wärmeträgermedium in einer flüssigen oder in einer festen Phase vorliegen kann.

Bei einer besonders vorteilhaften Ausgestaltung der erfindungsgemäßen Wärme- und Kältebereitstellungsvorrichtung ist vorgesehen, dass es sich bei dem Wärmeträgermedium um ein Gemisch aus Wasser, Glykol und Paraffin handelt. Vorteilhafterweise kann es sich bei dem Reaktionsmittel um Essigsäure handeln. Für bestimmte Einsatzzwecke der Wärme- und Kältebereitstellungsvorrichtung kann es zudem vorteilhaft sein, zusätzlich Tenside oder andere Zusätze zur Stabilisierung einer Emulsion aus verschiedenen Komponenten dem Wärmeträgermedium beizufügen.

Mit Hilfe der erfindungsgemäßen Wärme- und Kältebereitstellungsvorrichtung können folgende weitere Vorteile erreicht werden:

- Niedriger Temperaturhub der in dem Behälter angeordneten Wärmepumpen bzw. Kreisprozessanlagen
- Groß dimensionierte und strömungsgünstige Verdampfer und Kondensatoren der Wärmepumpen
- Kurze Leitungslängen der Wärmepumpen durch eine kompakte Bauweise
- Geringerer Schmiermittelanteil im Arbeitsstoff
- Geringe Wärme- bzw. Kälteverluste
- Akkumulation der entstehende Verlustwärme aus Kreisprozessen innerhalb des Speicherbehälters
- Einfache Kopplung von zwei oder mehreren Wärmepumpen bzw. Kreisprozessanlagen
- Kopplung verschiedener und unabhängig voneinander einsetzbarer Wärmepumpen bzw. Kreisprozessanlagen

- Nutzung preisgünstiger Kompressoren für die eingesetzten Wärmepumpen
- Parallele Nutzung von freier Kühlung für Kälteanlagen
- Parallele Nutzung verschiedener Wärmequellen für Wärmepumpen
- Vermeidung von Eisbildung am Verdampfer der Wärmepumpe
- Einfacher Einsatz von Latentspeichermedien
- Verwendung von Latentspeichermedien als Steuerungselement der Kreisprozesse
- Effektive Geräuschdämmung.

Beispielsweise resultiert die Einsparung von Schmiermittel aus der möglichen kompakten Bauweise und den sehr kurzen Leitungslängen innerhalb der Kreisprozesse. Der kleinere Schmiermittelanteil welcher dem Arbeitsstoffe zugesetzt wird steigert die Effizienz des Arbeitsstoffes. Gleichzeitig vermindern sich Strömungsverluste und Verluste bei der Verdichtung durch den Kompressor.

Beispielsweise erhöhen groß dimensionierte Verdampfer und Kondensatoren der innerhalb des Speicherbehälters angeordneten Kreisprozesse ebenfalls die Effizienz, indem Wärmeübergänge verbessert werden.

Das multifunktionale Wärmeträgermedium, dem Bestandteile zur Umwandlung, zur Bindung oder zur Neutralisierung des eingesetzten Arbeitsstoffes bzw. der eingesetzten Arbeitsstoffe beigefügt sind, erfüllt folgende Funktionen:

1. Funktion als Wärmeübertrager zwischen allen in dem Speicherbehälter befindlichen Wärmetauschern Damit wird ein Aus- und Einlagern von Nutzwärme und Nutzkälte in den Speicherbehälter ermöglicht. Während des Betriebs der Wärmepumpe bzw. der Kreisprozessanlage wird innerhalb des Wärmeträgermediums eine horizontale Temperaturschichtung erreicht. Damit wird die Ein- und Auslagerung von Wärme und Kälte unterschiedlicher Temperaturen in den Speicherbehälter und aus dem Speicherbehälter ermöglicht.

2. Funktion als Koppelmedium von zwei oder mehreren Kreisprozessanlagen innerhalb des Speicherbehälters Das Wärmeträgermedium übernimmt z.B. die Übertragung von Wärme aus einem Kondensator einer ersten Wärmepumpe zu einem Verdampfer einer zweiten Wärmepumpe und damit deren Kopplung. Im Unterschied zu bekannten Verfahren der Kopplung von Wärmepumpen bzw. Kreisprozessanlagen ist es auf diese Weise möglich, die einzelnen Wärmepumpen unabhängig voneinander betreiben zu können, da sich ein vertikaler Temperaturgradient auf Grund der temperaturabhängigen Dichteunterschiede des Wärmeträgermediums ergibt und die Wärme nach oben steigt.

3. Funktion als Akkumulator beliebiger Wärmeverluste der innerhalb des Speicherbehälters angeordneten Kreisprozessanlagen
Thermische Verluste der Wärmepumpen bzw. Kreisprozessanlagen fallen innerhalb des vorteilhafterweise wärmegedämmten Speicherbehälters an und verbleiben nutzbar innerhalb des Speicherbehälters. Die Nutzung wird durch temperaturabhängige Dichteunterschiede und einen damit aufsteigender Temperaturgradienten ermöglicht.

4. Funktion als Latentwärmespeicher durch den Einsatz von Phasenwechselmaterial (PCM) als Bestandteil des Wärmeträgermediums.
Dadurch wird eine höhere Energiedichte erreicht. Durch gezielte Auslegung bzw. Stoffauswahl kann der energieintensive Phasenwechsel in für die Systemanwendung sinnvolle Temperaturbereiche gelegt werde. Wie beschrieben ist es damit möglich die besonders effizienten Bereiche der Kennfelder der jeweiligen Kreisprozesse anzusteuern. Gleichzeitig kann die Auslegung des Systems dahingehend ausgerichtet werden, dass abhängig von den geforderten Temperaturen für Wärme oder Nutzkälte genau in diesem Temperaturbereichen eine höhere Energiespeicherdichte innerhalb des Speichers zur Verfügung gestellt wird.
Mit Paraffin erreicht man eine Energiedichte von bis zu 120 kW/H pro Kubikmeter. Andere PCM Materialien wie Salzhydrate oder Sorptionsspeicher sind in Abstimmung mit den weiteren Konfigurationen der Wärme- und Kältebereitstellungsvorrichtung ebenfalls verwendbar. Paraffin ist chemisch reaktionsträge bzw. inert und daher auch als Komponente des Wärmeträgermediums in allen Betriebszuständen gefahrlos einzusetzen.

5. Funktion als Frostschutz
Das Wärmeträgermedium kann z.B. bei Anwendungen unterhalb des Gefrierpunkts zum Beispiel für Tiefkühlung von Lebensmitteln oder bei Unterkühlung externer Wärmetauscher für Wärmepumpen Frostschutzfunktionen übernehmen. Diese Funktion wird beispielsweise durch einen Zusatz von Glykol im Wärmeträgermedium erreicht.

6. Funktion als Sicherheitsmedium bei in Kreisprozessanlagen verwendeten gefährlichen Arbeitsstoffen
Beispielsweise kann bei der Verwendung von Ammoniak als Arbeitsstoff dieses bei Schäden an Arbeitsstoffleitungen, Verdampfern, Kondensatoren, Drosseln oder Kompressoren oder anderen den Arbeitsstoff enthaltenen Komponenten der innerhalb des Speicherbehälters angeordneten Kreisprozessanlagen austreten. In einem solchen Schadensfall wirkt das Wärmeträgermedium als Sicherheitsmedium. Durch seinen Wasserbestandteil wird austretendes Ammoniak sofort absorbiert und damit unschädlich gemacht. Bei der Auslegung der erfindungsgemäßen Wärme- und Kältebereitstellungsvorrichtung ist die bei der chemischen Reaktion des Arbeitsstoffs mit den Bestandteilen auftretende Reaktionswärme zu berücksichtigen. Auch das Mengenverhältnis von eingesetztem Ammoniak und Wasser ist auf die mögliche komplette Absorption der eingesetzten Menge von Ammoniak im Wasseranteil des Wärmeträgermediums auszulegen. Dabei sind die zur Absorption ungünstigsten Temperaturen und Aggregatzustände sowohl des Ammoniaks als auch des Wasseranteils im Wärmeträger zu berücksichtigen.

Bei Auslegung der jeweiligen Anlage sind die Stoffmengenverhältnisse, entsprechend der stöchiometrischen Wertigkeit, aus den Reaktionsgleichungen der beteiligten Stoffe aufeinander abzustimmen. Die beteiligten Stoffe der Reaktion ergeben sich aus der Paarung der Arbeitsstoffe mit den Reaktionsmitteln die Bestandteil des Wärmeträgermediums sind.

Tritt Beispielsweise im Schadensfall Ammoniak aus Arbeitsstoff führenden Bestandteilen eines Kreisprozesses aus, kann das Wärmeträgermedium mit dem darin absorbierten Ammoniak einfach abtransportiert, weiterbehandelt oder auch zusätzlich umgewandelt werden.

Eine Ammoniak Wasserlösung ist ein Gefahrenstoff, der jedoch weiterverwendet und transportiert werden kann. Beispielsweise wird eine 25 % tige Lösung von Ammoniak in Wasser zusammen mit einem Katalysator als Reduktionsmittel für Stickoxide bei der Müllverbrennung genutzt. Eine konzentrierte Lösung wirkt ätzend. Schwächere Lösungen von Ammoniak in Wasser von etwa 10% sind bekannt als Salmiakgeist. Eine 25%- ige Lösung vom Ammoniakwasser ist handelsüblich.

In der Systemauslegung ist dabei die auftretende Reaktionswärme zu berücksichtigen. Auch das Mengenverhältnis von eingesetztem Ammoniak und Wasser ist auf die mögliche komplette Absorption der eingesetzten Menge von Ammoniak im Wasseranteil des Wärmeträgermediums auszulegen. Dabei sind die zur Absorption ungünstigsten Temperaturen und Aggregatzustände sowohl des Ammoniak als auch des Wasseranteils im Wärmeträger zu berücksichtigen. In diesem Anwendungsbeispiel mit Ammoniak als Arbeitsstoff und den für Nutzkälte oder zur Wärmeerzeugung notwendigen Dimensionen des Speichersystems ist das Verhältnis von Wasser zu Ammoniak ausreichend um in allen Betriebszuständen die Absorption von Ammoniak im Wasser zu gewährleisten. Die Löslichkeit von Ammoniak in Wasser ist extrem stark. Beispielsweise werden etwa 1100 Liter gasförmiges Ammoniak bei 0°Grad Celsius und 1 Bar Druck in 1 Liter Wasser aufgenommen. Bei 20°C werden 702 Liter Ammoniak in 1 Liter Wasser aufgenommen dabei wird eine Lösungswärme von 37,1 kJ/mol frei. Ammoniak bildet mit Wasser eine schwache Base $NH_3 + H_2O \rightarrow NH_4^+ + OH^-$. Damit ist im Schadensfall aus einer Kreisprozessanlage austretendes Ammoniak gebunden und nicht mehr lebensgefährlich. Massiv austretender Arbeitsstoff beendet gleichzeitig den Betrieb der betroffenen Kreisprozessanlage. Zur Schadensbehebung kann die Base wegtransportiert oder weiterbehandelt bzw. umgewandelt werden.

7. Funktion als Neutralisationsmittel und Reaktionspartner

Diese Funktion, wie auch die schon beschriebene Absorption von Ammoniak, tritt erfindungsgemäß erst ein, wenn durch einen Schadensfall an den die Arbeitsstoffe führenden Komponenten Arbeitsstoff austritt. Durch das sofort reagierende Wärmeträgermedium innerhalb des Speicherbehälters tritt giftiger Arbeitsstoff nicht in die Umwelt aus. Zudem wird es chemisch gebunden oder umgewandelt, so dass eine Gesundheitsgefährdung ausgeschlossen ist. In dem hier verwandten Beispiel wird durch die Umwandlung einer AmmoniakWasser-Lösung in Ammoniumacetat mittels der Essigsäure der Transport oder die Reparatur einer erfindungsgemäßen Wärme- und Kältebereitstellungsvorrichtung vereinfacht.

Diese Umwandlung ist eine stark exotherme Reaktion.

Die Reaktion verläuft nach der Gleichung:

$$NH4 + (aq) + OH\text{-}(aq) + HAc(aq)\ Ac\text{-}\ (aq) + NH4 + (aq) + H2O \qquad (I)$$

In diesem Beispiel ist neben dem Mengenverhältnis von Ammoniak und Wasser auch das Mengenverhältnis von Essigsäure zu Ammoniak zu berücksichtigen. Überschlägig bedarf es etwa einem Fünftel der Menge des Ammoniaks in den Kältekreisen an Essigsäure als Bestandteil des Wärmeträgermediums. Der Mengenanteil der Essigsäure

8. Funktion als reines Speichermedium

Ohne den aktiven Betrieb der innerhalb des Speichers befindlichen Kreisprozessanlage funktioniert das erfindungsgemäße Speichersystem beispielsweise als Solarspeicher mit angeschlossenen Solarkollektoren. In einem anderen Anwendungsfall zur Erzeugung von Nutzkälte kann das erfindungsgemäße Speichersystem bei Temperaturen am externen Wärmetauscher unter der Kühltemperatur als System freier Kälte ohne den Betrieb der Kreisprozessanlage genutzt werden. Beispielsweise als Kaltwassersatz im Winter.

Weitere Aspekte der Erfindung:

Die hier offenbarte Wärme- und Kältebereitstellungsvorrichtung geht über die Anordnung und Betrieb von Kreisprozessanlagen innerhalb eines Speicherbehälters hinaus. Der zeitweise oder permanente Betrieb von einem oder mehreren Kreisprozessanlagen innerhalb eines Speicherbehälters bedarf zusätzlicher Anpassungen. Kreisprozessanlagen nach dem derzeitigen Stand der Technik welche auf diese ungewöhnliche Weise innerhalb eines Speicherbehälters montiert werden, können ohne eine ganze Reihe von Modifikationen und zusätzliche Steuerungsparameter nicht effektiv funktionieren. Im Unterschied zu Anlagen nach dem Stand der Technik besteht beispielsweise das Problem der Überhitzung im passiven Betrieb als Wärmespeicher. In diesem Betriebsfall dient der Speicher als Wärmespeicher ohne den Betrieb der eingebauten Kreisprozessanlage. Durch eine Temperaturerhöhung innerhalb des Speichers kommt es zwangsläufig auch zu einer Temperatur- und Druckerhöhungen in den Arbeitsstoff führenden Komponenten der still stehenden Kreisprozessanlage. Abhängig von dem verwendeten Arbeitsstoff kann es durch Druckerhöhungen zu Materialschäden kommen. Eine Druckerhöhung vom mehreren 100 % in den Arbeitsstoff führenden Bauteilen ist Beispielsweise durch eine passive Temperaturerhöhung von 45°C auf 95°C möglich. Dabei bedarf es Sicherheitseinrichtungen und Steuerungsparametern die die Temperatur im Speicher begrenzen. Erfindungsgemäß sind über die Ansteuerung von Kälteanlagen nach dem Stand der Technik hinaus weitere Maßnahmen vorzunehmen.

Die Dimensionierung der einzelnen Kreisprozessanlagen ist infolge der sehr kompakten Bauweise gegenüber dem Stand der Technik abzuändern. Beispielsweise ist der Ölkreislauf wesentlich kürzer, so dass ein geringerer Anteil Öl im Arbeitsstoff ausreichend ist. Durch die dadurch verminderten Strömungsverluste kann erforderliche Leistung des Verdichters vermindert werden.

Der Aufbau einer hier gegenständlichen Wärme- und Kältebereitstellungsvorrichtung bedingt eine vielfältige Abstimmung bei der Auslegung und Dimensionierung. Es sind nachfolgende Parameter und Komponenten auf den Einsatzzweck und die möglichen Betriebszuständen abzustimmen:

1. Begrenzung der Speichertemperatur auch im passiven Betrieb, d.h. ohne Einsatz der Kreisprozessanlagen. Die maximale Temperatur ist abhängig von den zulässigen Betriebsdrücken des Arbeitsstoffes in den Komponenten.

2. Abstimmung aller eingesetzten Arbeitsstoffe mit den gleichzeitig im Wärmeträgermedium verwendeten Reaktions- und Bindemitteln. Bei dem Einsatz von zwei oder mehreren Kreisprozessanlagen sind diese so abzustimmen, dass auch der gleichzeitige Austritt unterschiedlicher Arbeitsstoffe im Schadensfall chemisch kontrolliert beherrscht wird.

3. Die Abstimmung von zwei oder mehr Kreisprozessanlagen im Speicher erfolgt mit möglichst niedrigem Temperaturhub der einzelnen Kreisprozessanlagen. Beispielsweise durch einen stufenweisen Temperaturhub verteilt über die beteiligten Kreisprozessanlagen und die entsprechende Anordnung von Wärmetauschern zur Aus oder Einlagerung von externer Wärme in den Speicher.

4. Besonderen Auslegungsaufwand erfordert die Kombination unterschiedlicher Arten von Kreisprozessanlagen. Beispielsweise die Kombination einer elektrisch angetriebenen Kreisprozessanlage mit Ammoniak als Arbeitsstoff und einer Diffusionsabsorptionswärmepumpe mit Ammoniak / Wasser "Kältekreis". Für verschiedene vom System zu liefernde Temperaturen können selektiv einzelne Kreisprozessanlagen in Betrieb genommen werden. Vorteilhafterweise sind in einer Steuerungseinrichtung dazu die Kennfelder der einzelnen Kältekreisprozesse abgelegt. Durch eine solche Option können die jeweils günstigsten Betriebsbedingungen der Kreisprozessanlagen genutzt werden. Die Auswahl des Betriebes und die Betriebsdauer der jeweiligen Kreisprozessanlage erfolgt abhängig von den geforderten Nutzkälte oder Wärmemengen und deren Temperatur. Gleichzeitig wird dabei die Temperatur der externen Wärmetauscher und deren Wärmekapazität berücksichtigt. Die Steuerung der jeweiligen Vorrichtung erfolgt nach dem Prinzip, dass vor dem Einsatz der Kreisprozessanlagen die direkte Nutzung externe Wärme oder "Kälte" aus den externen Wärmtauscher zur erfolgen hat. Danach erfolgt die schrittweise oder zeitlich getaktete Nutzung der Kreisprozessanlage zur Erreichung der vom System geforderten Temperaturen und Wärmemengen.

Die Regelung steuert den Geräteverbund nach den Grundsätzen der bestmöglichen Effizienz und einer Auslastung aller angeschlossenen Einheiten. Die Regelung ermittelt die maximal erreichbare Effizienz in Abhängigkeit der eingesetzten externen Wärmetauscher zur Leistungsaufnahme und der Leistungsabgabe. Weitere vorteilhafte Ausgestaltungen der erfindungsgemäßen Wärme- und Kältebereitstellungsvorrichtung werden anhand von in den Zeichnungen dargestellten Ausführungsbeispielen näher erläutert.

Es zeigt:

Fig. 1 eine schematisch dargestellte Wärme- und Kältebereitstellungsvorrichtung mit einer innerhalb eines Speicherbehälters angeordneten Wärmepumpe,

Fig. 2a eine schematisch dargestellte Wärme- und Kältebereitstellungsvorrichtung mit zwei innerhalb eines Speicherbehälters angeordneten Wärmepumpen und mehreren innerhalb des Speicherbehälters angeordneten Wärmetauschern,

Fig. 2b eine schematisch dargestellte Schnittansicht entlang der Linie IIb-IIb der in Fig. 2a dargestellten Wärme- und Kältebereitstellungsvorrichtung,

Fig. 3 eine schematisch dargestellte Wärme- und Kältebereitstellungsvorrichtung mit einer innerhalb des Speicherbehälters angeordneten Absorptionskältemaschine,

Fig. 4a eine schematisch dargestellte Wärme- und Kältebereitstellungsvorrichtung mit einer Umschaltvorrichtung,

Fig. 4b eine schematisch dargestellte Schnittansicht entlang der Linie IVb-IVb der in Fig. 4a dargestellten Wärme- und Kältebereitstellungsvorrichtung,

Fig. 5 eine schematisch dargestellte Wärme- und Kältebereitstellungsvorrichtung für den Einsatz als Fahrzeugkühlanlage,

Fig. 6 eine schematisch dargestellte Wärme- und Kältebereitstellungsvorrichtung mit einem in zwei Bereiche getrennten Speicherbehälter,

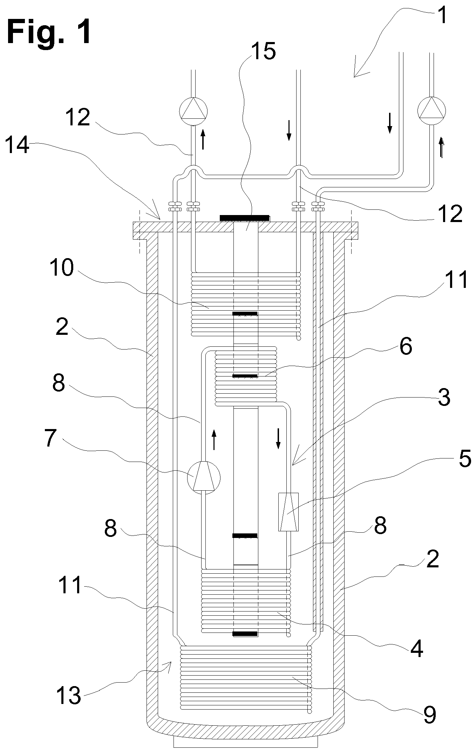

Fig. 1 zeigt eine schematisch dargestellte Wärme- und Kältebereitstellungsvorrichtung 1 mit einer innerhalb eines Speicherbehälters 2 angeordneten Kreisprozess 3. Der Kreisprozess 3 weist einen Verdampfer 4, eine Drossel 5, einen Kondensator 6 und einen Kompressor 7 auf, wobei diese Komponenten durch Leitungen 8 miteinander verbunden sind.

Innerhalb des Speicherbehälters 2 sind auch ein in einem unteren Bereich des Speicherbehälters 2 angeordneter erster Wärmetauscher 9 und ein in einem oberen Bereich des Speicherbehälters angeordneter zweiter Wärmetauscher 10 vorgesehen. Der erste Wärmetauscher 9 ist über Leitungen 11 mit einem nicht dargestellten thermischen Wärmetauscher Beispielsweise einer Solaranlage verbunden. Der zweite Wärmetauscher 10 ist über Leitungen 12 mit einem Wärmetauscher Beispielsweise einer Heizungsanlage verbunden.

Über den ersten Wärmetauscher 9 wird Nutzwärme von der thermischen Solaranlage in ein in dem Speicherbehälter 2 angeordnetes Wärmeträgermedium 13 eingespeichert. Mit Hilfe der Wärmepumpe 3 wird ein Temperaturniveau des Wärmeträgermediums 13 angehoben, so dass über den zweiten Wärmetauscher 10 Wärme für den Betrieb der Heizungsanlage entnommen werden kann.

Die Wärmepumpe 3 wird mit Ammoniak als Arbeitsstoff betrieben. Das Wärmeträgermedium 13 enthält ein Gemisch aus Wasser, Glykol, Paraffin und Essigsäure. Der Speicherbehälter 2 ist wärmegedämmt.

Die Leitungen 11 und 12 sind an einer Oberseite 14 des Speicherbehälters 2 aus dem Speicherbehälter 2 herausgeführt. Diese Leitungen sind mit einer Verschraubung zu trennbar ausgeführt. Auf diese Weise wird eine Montage des Wärme- und Kältebereitstellungsvorrichtung 1 erleichtert, da der Speicherbehälter 2 einfach nach Aufstellung mit dem Wärmeträgermedium 13 befüllt werden kann.

Der zweite Wärmetauscher 10, der Kondensator 6 und der Verdampfer 4 sind an einer mit dem Speicherbehälter 2 verbundenen Montagehalterung 15 festgelegt.

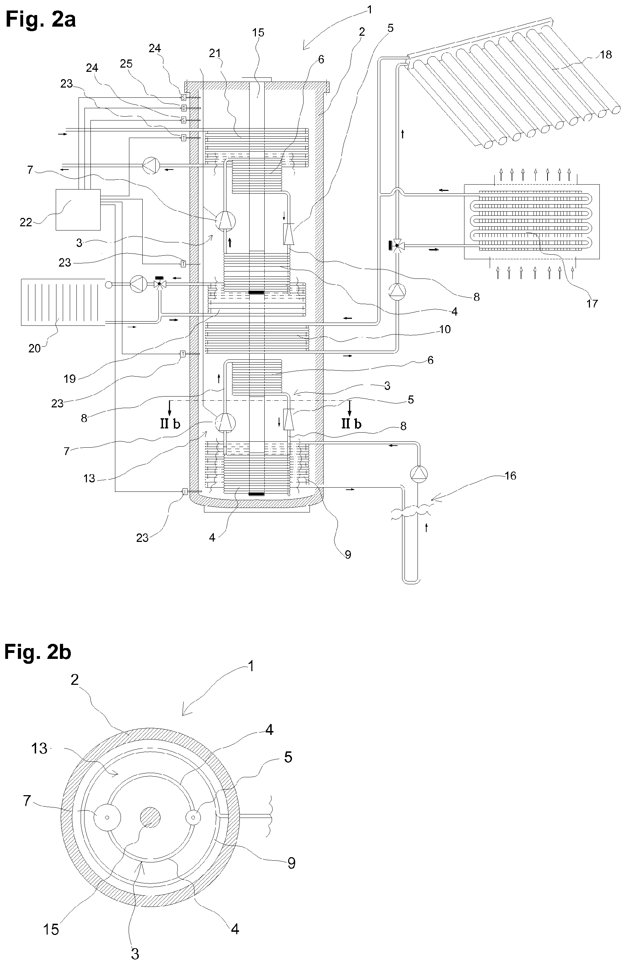

Fig. 2a zeigt eine schematisch dargestellte Wärme- und Kältebereitstellungsvorrichtung 1 mit zwei innerhalb eines Speicherbehälters 2 angeordneten Wärmepumpen 3. Es handelt sich um eine drucklose Ausführung des Speicherbehälters. Im oberen Bereich des Behälters befindet sich ein vorgesehenes Volumen zur möglichen Ausdehnung des Wärmeträgermediums.

Ein erster Wärmetauscher 9 ist in einem unteren Bereich des Speicherbehälters 2 angeordnet. Der Wärmetauscher 9 ist mit einer geothermischen Wärmequelle 16 hydraulisch verbunden.

Ein zweiter Wärmetauscher 10 ist in einem mittleren Bereich des Speicherbehälters 2 angeordnet und hydraulisch mit einem externen Wärmetauscher 17 und einer thermischen Solaranlage 18 hydraulisch verbunden.

Oberhalb des zweiten Wärmetauschers 10 ist ein dritter Wärmetauscher 19 angeordnet, wobei der dritte Wärmetauscher 19 mit einer Heizungsanlage 20 hydraulisch verbunden ist und die Heizungsanlage 20 mit Wärme versorgt.

In einem oberen Bereich des Speicherbehälters 2 ist ein vierter Wärmetauscher 21 vorgesehen, der hydraulisch mit einem nicht dargestellten Heißwasserverbraucher verbunden ist.

Zur Steuerung und Regelung der Wärmepumpen 3 bzw. der gesamten Wärme- und Kältebereitstellungsvorrichtung 1 ist eine Steuerungsvorrichtung 22 vorgesehen, die Informationen von mehreren innerhalb des Speicherbehälters 2 angeordneten Temperatursensoren 23, Füllstandssensoren 24 und einem Drucksensor 25 verarbeitet und nach einem vorgegebenen Algorithmus sämtliche steuer- bzw. regelbaren Komponenten der Wärme- und Kältebereitstellungsvorrichtung 1 ansteuert.

Fig. 2b zeigt eine schematisch dargestellte Schnittansicht entlang der Linie IIb-IIb der in Fig. 2a dargestellten Wärme- und Kältebereitstellungsvorrichtung 1. Der Speicherbehälter 2 Wärme- und Kältebereitstellungsvorrichtung 1 weist einen kreisförmigen Querschnitt auf. Die Wärmepumpe 3 und der erste Wärmetauscher 9 sind ebenfalls kreisförmig ausgestaltet und koaxial zueinander innerhalb des Speicherbehälters 2 angeordnet, wobei der erste Wärmetauscher 9 den Verdampfer 4 der Wärmepumpe 3 umgibt.

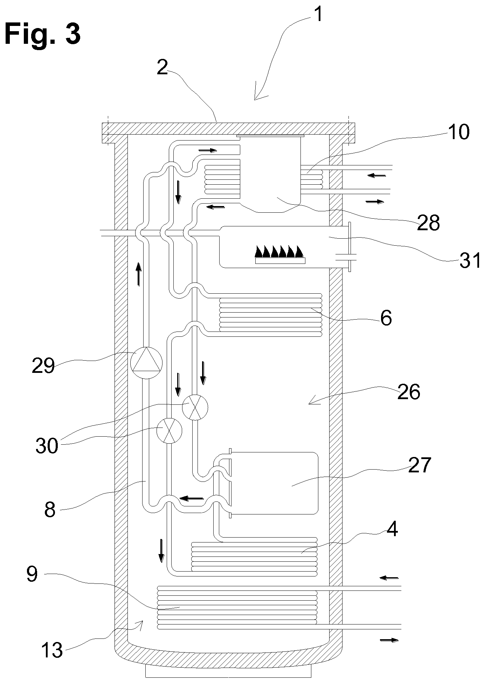

In Fig. 3 ist schematisch eine Wärme- und Kältebereitstellungsvorrichtung 1 dargestellt. Innerhalb des Speicherbehälters 2 ist eine Absorptionskältemaschine 26 angeordnet. Das Schema entspricht dem eines Ammoniak - Wasser - Absorptionskältekreisprozesses.

Die Absorptionskältemaschine 26 weist einen Kondensator 6, einen Verdampfer 4, einen Absorber 27, einen Austreiber 28, eine Lösungsmittelpumpe 29 und in jedem Kreis eine Drossel 30 auf. Diese Komponenten der Absorptionskältemaschine sind durch Leitungen 8 miteinander verbunden. In der Darstellung ist exemplarisch eine Leitung mit einem Bezugszeichen gekennzeichnet.

Innerhalb des Speicherbehälters 2 ist zudem ein Gasheizer 31 zur Bereitstellung und Übertragung von Wärmeenergie auf das Wärmeträgermedium 13. Das Wärmeträgermedium 13 weist auf den in der Absorptionskältemaschine 26 verwendeten Arbeitsstoff angepasste Absorptions- und Reaktionsmittel auf, um im Schadensfall aus der Absorptionskältemaschine 26 austretendes giftiger bzw. feuergefährlicher Arbeitsstoff zu binden oder umzuwandeln.

In dem Austreiber 28 (Kocher) wird Ammoniak z.B. durch Gasbeheizung verdampft. In einem Kondensator 6 wird das ausgetriebene Ammoniak kondensiert und frei werdende Wärme steht im Wärmeträgermedium 13 welches den Kondensator 6 umgibt zur Verfügung. In einem Verdampfer 4 wird Ammoniak bei reduziertem Druck verdampft. Die dazu erforderliche Wärme wird im Bereich des Verdampfers 4 dem Wärmeträgermedium 13 entzogen. In einem Absorber 27 nimmt das aus dem Austreiber 28 kommende Wasser die aus dem Verdampfer 4 kommenden Ammoniakdämpfe wieder auf. Die dabei frei werdenden Absorptions- und Kondensationswärme wird ebenfalls an das Wärmeträgermedium 13 abgegeben.

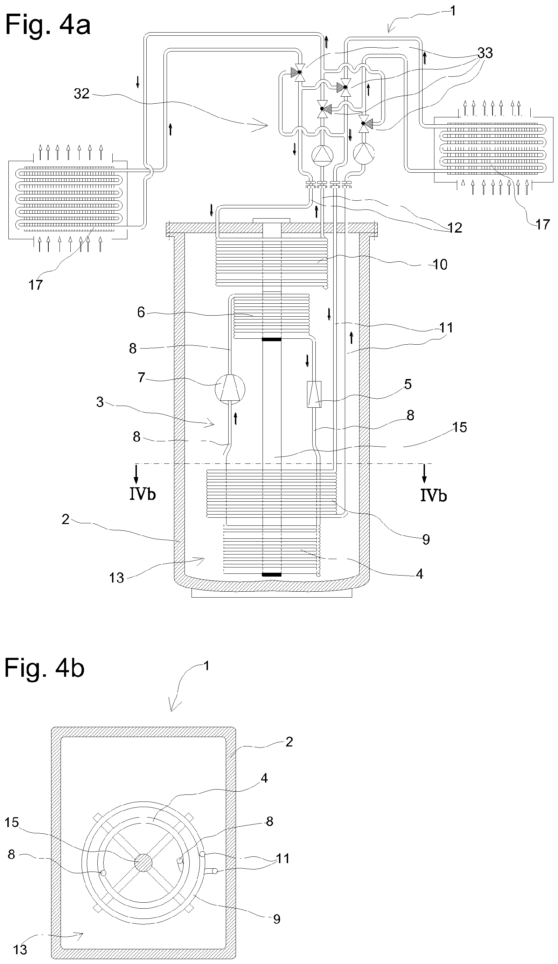

Fig. 4a zeigt eine schematisch dargestellte Wärme- und Kältebereitstellungsvorrichtung 1. Ein Innerhalb des Speicherbehälters 2 angeordneter erste Wärmetauscher 9 und ein zweiter Wärmetauscher 10 sind hydraulisch über eine Umschaltvorrichtung 32 mit externen Wärmetauschern 17 verbunden. Die Umschaltvorrichtung 32 weist 4 steuerbare Ventile 33 auf. Mit Hilfe der Ventile 33 können hydraulische Verbindungen des ersten Wärmetauschers 9 und des zweiten Wärmetauscher 10 mit den externen Wärmetauschern 17 so angepasst werden, dass die externen Wärmetauscher 17 entweder zum Kühlen oder zum Heizen verwendet werden können.

In Fig. 4b ist schematisch eine Schnittansicht entlang der Linie IVb-IVb der in Fig. 4a abgebildeten Wärme- und Kältebereitstellungsvorrichtung 1 dargestellt. Der Speicherbehälter 2 weist einen rechteckigen Querschnitt auf. der erste Wärmetauscher 9 und der Verdampfer 4 sind kreisförmig ausgestaltet und koaxial zueinander an der Montagehalterung 15 befestigt.

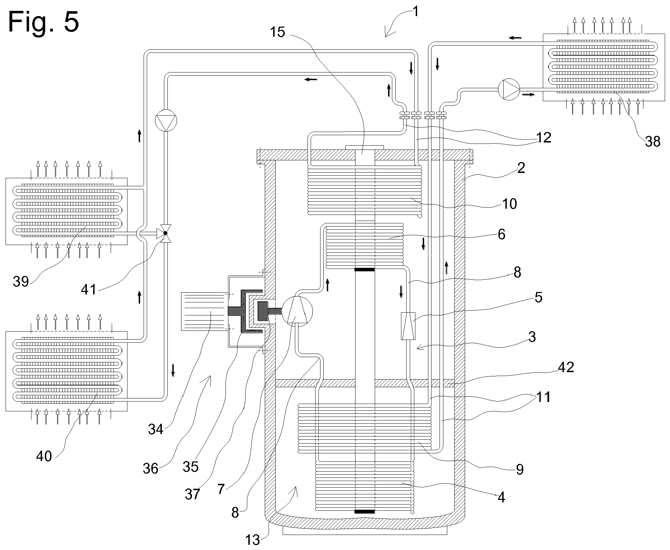

Fig. 5 zeigt schematisch eine Wärme- und Kältebereitstellungsvorrichtung 1 für mobilen Einsatz Beispielsweise für ein Fahrzeug. An dem Speicherbehälter 2 ist ein Elektromotor 34 angeordnet, der mit einem ersten Magnetkupplungsteil 35 einer Magnetkupplung 36 verbunden ist. An dem Kompressor 7 der der innerhalb des Speicherbehälters 2 angeordneten Wärmepumpe 3 ist ein zweites Magnetkupplungsteil 37 der Magnetkupplung 36 angeordnet. Mit Hilfe der Magnetkupplung 36 kann die Wärmepumpe 3 angetrieben, wobei der Elektromotor zum Antrieb des Kompressors 7, welcher sich innerhalb des Speicherbehälters befindet, außerhalb des Speicherbehälters 2 angeordnet ist. Alternativ zu einem Elektromotor kann der Antrieb auch über eine Riemenscheibe eine Kette oder ähnliches vom Fahrzeugmotor übernommen werden. Diese Anordnung ermöglicht den Antrieb ohne Wellendichtung in einem hermetisch dichten Behälter. In den Fig.1; Fig.2 und Fig.4 erfolgt der Antrieb über direkt im Speicher befindliche Antriebsmotoren. Dort besteht die Verbindung von außen zu dem Kompressor innerhalb des Behälters lediglich aus einem Strom und Steuerungskabel. Hierfür geeignete Kompressoren sind Beispielsweise vollhermetische Scrollkompressoren.

Der Speicherbehälter 2 ist wärmegedämmt ausgeführt. Das Wärmeträgermedium 13 weist einen Reaktionspartner, ein Bindemittel und einen chemischen Komplexbildner zur Absorption; Reduktion oder Umwandlung des in der Wärmepumpe 3 verwendeten Arbeitsstoffes auf.

Der erste Wärmetauscher 9 ist mit einem ersten externen Wärmetauscher 38 hydraulisch verbunden. Der erste externe Wärmetauscher 38 ist dazu geeignet, Nutzkälte an einen Innenraum des Fahrzeugs abzugeben. Der zweite Wärmetauscher 10 ist mit einem zweiten externen Wärmetauscher 39 hydraulisch verbunden, wobei der zweite externe Wärmetauscher dazu vorgesehen ist, zeitweise Wärme an den Innenraum des Fahrzeugs abzugeben. Der zweite Wärmetauscher 10 ist zusätzlich mit einem dritten externen Wärmetauscher 40 hydraulisch verbunden. Der dritte externe Wärmetauscher 40 wird als Rückkühler eingesetzt. Der zweite externe Wärmetauscher 39 und der dritte externe Wärmetauscher 40 sind über ein Umschaltventil 41 verbunden. Je nach Stellung des Umschaltventils 41 kann der zweite externe Wärmetauscher 39 zur Heizung des Innenraums hinzugezogen werden, während der erste Wärmetauscher 38 mit seiner kalten Oberfläche die Innenraumluft entfeuchtet. Im Sommerbetrieb wird nur der dritte Wärmetauscher 40 als Rückkühler genutzt.

Fig.5 zeigt die flexible Nutzungsmöglichkeit der Vorrichtung, welche sich durch die Verwendung eine Wärmeträgers und nicht eines möglicherweise giftigen Arbeitsstoffes in den externen Wärmetauschern wir dem Verdampfer ergibt.

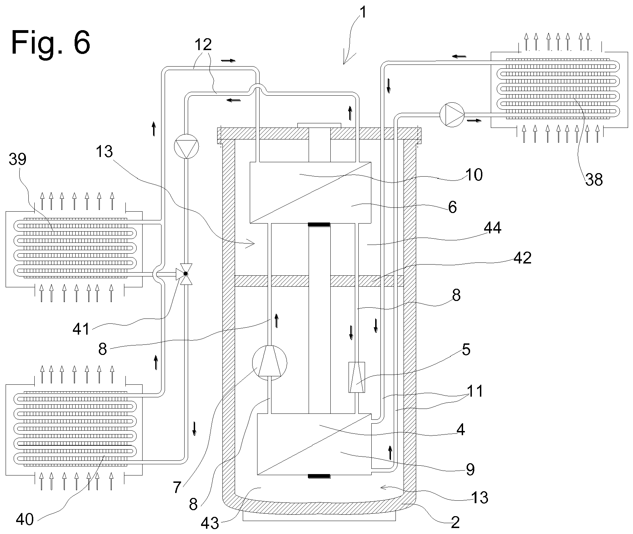

Fig. 6 zeigt eine schematische Darstellung einer Wärme- und Kältebereitstellungsvorrichtung 1 für ein Fahrzeug mit einem Speicherbehälter 2. Der Speicherbehälter 2 weist zwei durch eine Trennvorrichtung 42 hydraulisch voneinander getrennte Speicherkammern 43 und 44 auf. Durch die Aufteilung des Speicherbehälters in mehrere Speicherkammern 43 und 44 kann eine Temperaturverteilung des Wärmeträgermediums 13 innerhalb der Speicherkammern 43 und 44 an besondere Einsatzzwecke angepasst werden. Zudem ist es möglich unterschiedliche Wärmeträgermedien in den Speicherkammern 43 und 44 einzusetzen, wobei den Wärmeträgermedien an den jeweiligen Einsatzzweck angepasst sein können. Es ist auch möglich dass der Speicherbehälter 2 in drei oder mehr Speicherkammern unterteilt ist. Die Aufteilung in verschiedene Kammern innerhalb eines Speicherbehälters behindert den Temperaturausgleich der von der temperaturabhängigen Dichte des jeweiligen Wärmeträgermediums und damit von der Schwerkraft getrieben wird. Durch einzelne Kammern innerhalb des Speicherbehälter ist eine Temperaturdifferenz zwischen Verdampfer und Kondensator welche sich in unterschiedlichen Kammern befinden besser erreichbar. Dies gilt insbesondere im mobilen Einsatz. Trotz der Aufteilung in verschieden Kammern bleibt die Funktion des Wärmeträgermediums als Reaktionspartner von im Schadensfall austretendem Arbeitsstoff erhalten.

**Patentansprüche**

1.  Wärme- und Kältebereitstellungsvorrichtung (1) mit einem Speicherbehälter (2) und mit einem Wärmeträgermedium (13), das in einem Innenraum des Speicherbehälters (2) angeordnet ist, wobei innerhalb des Speicherbehälters (2) zusätzlich eine beliebige Kreisprozessanlage (3) angeordnet ist, welche in Ihrem Kreislauf mit einem Arbeitsstoff betrieben wird, wobei das Wärmeträgermedium (13) in einem unteren Bereich des Innenraums meist eine niedrigere Temperatur als in einem darüber angeordneten Bereich des Innenraums aufweist, wobei alle Komponenten der Kreisprozessanlage (3), welche den Arbeitsstoff beinhalten, in dem Innenraum des Speicherbehälters (2) angeordnet sind, und wobei der Speicherbehälter (2) so an den Arbeitsstoff angepasst ist, dass bei einer Beschädigung der den Arbeitsstoff führenden Komponenten aus der Kreisprozessanlage (3) austretender Arbeitsstoff sicher innerhalb des Speicherbehälters (2) verbleibt, **dadurch gekennzeichnet, dass** das Wärmeträgermedium (13) Bestandteile zur Bindung oder Umsetzung des Arbeitsstoffes aufweist und dass der Anteil des Wärmeträgermediums (13) als Reaktionspartner des jeweiligen Arbeitsstoffes so bemessen ist, dass der in der Kreisprozessanlage (3) enthaltene Arbeitsstoff vollständig von den Bestandteilen gebunden oder umgewandelt werden kann.

2.  Wärme- und Kältebereitstellungsvorrichtung (1) gemäß Anspruch 1, **dadurch gekennzeichnet, dass** eine Druckfestigkeit des Speicherbehälters (2) an den verwendeten Arbeitsstoff angepasst ist.

3.  Wärme- und Kältebereitstellungsvorrichtung (1) gemäß Anspruch 1 oder Anspruch 2, **dadurch gekennzeichnet, dass** eine Füllhöhe einer Befüllung des Speicherbehälters (2) mit dem Wärmeträgermedium (13) an den Arbeitsstoff angepasst ist.

4.  Wärme- und Kältebereitstellungsvorrichtung (1) gemäß einem der voranstehenden Ansprüche, **dadurch gekennzeichnet, dass** die in dem Innenraum angeordneten Komponenten der Kreisprozessanlage (3) teilweise oder vollständig von dem Wärmeträgermedium (13) umschlossen sind.

5.  Wärme- und Kältebereitstellungsvorrichtung (1) gemäß einem der voranstehenden Ansprüche, **dadurch gekennzeichnet, dass** es sich bei dem Arbeitsstoff um Ammoniak oder Kohlendioxid oder einen reinen Kohlenwasserstoff handelt.

6.  Wärme- und Kältebereitstellungsvorrichtung (1) gemäß einem der voranstehenden Ansprüche, **dadurch gekennzeichnet, dass** das Wärmeträgermedium (13) mindestens teilweise aus mindestens einem Latentwärmespeichermaterial besteht.

7.  Wärme- und Kältebereitstellungsvorrichtung (1) gemäß einem der voranstehenden Ansprüche, **dadurch gekennzeichnet, dass** das Wärmeträgermedium (13) in einer flüssigen oder einer festen Phase vorliegt.

8.  Wärme- und Kältebereitstellungsvorrichtung (1) gemäß einem der voranstehenden Ansprüche, **dadurch gekennzeichnet, dass** es sich bei dem Wärmeträgermedium (13) um ein Gemisch aus Wasser, Glykol und Paraffin handelt.

9.  Wärme- und Kältebereitstellungsvorrichtung (1) gemäß einem der voranstehenden Ansprüche, **dadurch gekenn-**

zeichnet, dass dem Wärmeträgermedium (13) ein Bestandteil beigesetzt ist, der mit dem jeweiligen Arbeitsstoff eine Stoffumwandlung herbeiführt.

10. Wärme- und Kältebereitstellungsvorrichtung (1) gemäß einem der voranstehenden Ansprüche, **dadurch gekennzeichnet, dass** ein Anteil des Wärmeträgermediums (13) zusätzlich oder ausschließlich ein weiteres Latentspeichermaterial enthält, welches im bestimmungsgemäßen Betrieb des Speicherbehälters (2) mit der Kreisprozessanlage (3) keinen Phasenwechsel vollzieht, wobei es erst durch ein Aufkommen zusätzlicher Wärme durch Wärmeeintrag oder durch exotherme Reaktionen von Arbeitsstoff mit Reaktionsstoffen aus dem Wärmeträgermedium (13) bei diesem Latentspeichermaterial zu einem Phasenwechsel und Energieaufnahme kommt und eine Überhitzung des Speicherbehälters verhindert.

11. Wärme- und Kältebereitstellungsvorrichtung (1) gemäß einem der voranstehenden Ansprüche, **dadurch gekennzeichnet, dass** mindestens zwei Kreisprozessanlagen (3) in dem Speicherbehälter (2) angeordnet sind.

12. Wärme- und Kältebereitstellungsvorrichtung (1) gemäß einem der voranstehenden Ansprüche, **dadurch gekennzeichnet, dass** der Speicherbehälter (2) unabhängig vom Betrieb der Kreisprozessanlagen (3) als Wärmeakkumulator und Wärmeverteiler genutzt werden kann.

13. Wärme- und Kältebereitstellungsvorrichtung (1) gemäß einem der voranstehenden Ansprüche, **dadurch gekennzeichnet, dass** der Speicherbehälter (2) mindestens eine Trennvorrichtung (42) aufweist, wobei die Trennvorrichtung (42) eine weitgehende oder vollständige thermische und stoffliche Trennung zwischen Speicherkammern (43, 44) des Speicherbehälters (2) bewirkt.

14. Wärme- und Kältebereitstellungsvorrichtung (1) gemäß einem der voranstehenden Ansprüche, **dadurch gekennzeichnet, dass** Leitungen und Komponenten der Kreisprozessanlage (3) in verschiedenen vertikalen Positionen unterschiedlicher Temperatur des Speicherbehälters (2) angeordnet und speziell gestaltet werden, um die betriebsbedingte Abwärme einzelner Komponenten wie die eines Kompressors an das diese umgebende Wärmeträgermedium (13) abgeben zu können.

15. Wärme- und Kältebereitstellungsvorrichtung (1) gemäß einem der voranstehenden Ansprüche, **dadurch gekennzeichnet, dass** ein Funktionswechsel mittels einer Umschaltvorrichtung (32) zwischen externen Wärmetauschern (17), über welche Wärme in den Speicherbehälter (2) oder aus dem Speicherbehälter (2) transportiert wird, dazu führt, dass ein und derselbe Wärmetauscher (17) wechselweise eine Kühl- oder Heizfunktion übernehmen.

16. Wärme- und Kältebereitstellungsvorrichtung (1) gemäß einem der voranstehenden Ansprüche, **dadurch gekennzeichnet, dass** der Einbau von Wärmerohren zusammen mit Kältekreisprozessen, als Varianten der Kreisprozessanlagen (3), innerhalb des Speicherbehälters eine steuernde Funktion durch Wärmetransport im Wärmeträgermedium (13) bewirkt, wobei der Wärmetransport durch ein Wärmerohr entgegen der, durch temperaturabhängige Dichteunterschiede, nach oben ansteigenden Temperaturen erfolgen kann.

## Claims

1. Hot and cold temperature supply device (1) having a storage container (2) and a heat transfer medium (13) arranged in an inner space of the storage container (2), wherein an thermodynamic cycle process system (3) is additionally arranged inside the storage container (2) and operated by means of a working medium in the cycle thereof, wherein the heat transfer medium (13) mostly has a lower temperature in a lower area of the inner space than in an area of the inner space arranged thereabove, wherein all components of the cycle process system (3) that contain the working medium are arranged in the inner space of the storage container (2), and wherein the storage container (2) is adapted to the working medium in such a way that when the components carrying the working medium are damaged, the working medium leaking from the cycle process system (3) securely remains inside the storage container (2), **characterized in that** the heat transfer medium (13) comprises constituents for binding or reacting the working medium and **in that** the proportion of the heat transfer medium (13) as a reaction partner of the respective working medium is configured in such a way that the working medium contained in the cycle process system (3) can be completely bound or converted by the constituents.

2. Hot and cold temperature supply device (1) according to claim 1, **characterized in that** a pressure resistance of the storage container (2) is adapted to the working medium used.

3. Hot and cold temperature supply device (1) according to claim 1 or 2, **characterized in that** a filling height of a filling of the storage container (2) with the heat transfer medium (13) is adapted to the working medium.

4. Hot and cold temperature supply device (1) according to one of the preceding claims, **characterized in that** the components arranged in the inner space of the cycle process system (3) are partially or completely enclosed by the heat transfer medium (13).

5. Hot and cold temperature supply device (1) according to one of the preceding claims, **characterized in that** the working medium is ammonia or carbon dioxide or a pure hydrocarbon.

6. Hot and cold temperature supply device (1) according to one of the preceding claims, **characterized in that** the heat transfer medium (13) at least partially consists of at least one latent heat storage material.

7. Hot and cold temperature supply device (1) according to one of the preceding claims, **characterized in that** the heat transfer medium (13) is present in a liquid or a solid phase.

8. Hot and cold temperature supply device (1) according to one of the preceding claims, **characterized in that** the heat transfer medium (13) is a mixture of water, glycol and paraffin.

9. Hot and cold temperature supply device (1) according to one of the preceding claims, **characterized in that** an ingredient, which causes a substance conversion together with the respective working medium, is added to the heat transfer medium (13).

10. Hot and cold temperature supply device (1) according to one of the preceding claims, **characterized in that** part of the heat transfer medium (13) additionally or exclusively contains a further latent storage material, which does not perform a phase change in the intended operation of the storage container (2) with the cycle process system (3), wherein only the appearance of additional heat input or exothermal reactions of the working medium with reaction substances from the heat transfer medium (13) result in a phase change and energy absorption and overheating of the storage container is prevented.

11. Hot and cold temperature supply device (1) according to one of the preceding claims, **characterized in that** at least two cycle process systems (3) are arranged in the storage container (2).

12. Hot and cold temperature supply device (1) according to one of the preceding claims, **characterized in that** the storage container (2) can be used as a heat accumulator and heat distributor independently from the operation of the cycle process system (3).

13. Hot and cold temperature supply device (1) according to one of the preceding claims, **characterized in that** the storage container (2) comprises at least one separating device (42), wherein the separating device effects an extensive or complete thermal separation or material separation between storage chambers (43, 44) of the storage container (2).

14. Hot and cold temperature supply device (1) according to one of the preceding claims, **characterized in that** lines and components of the cycle process system (3) are arranged in various vertical positons of different temperature of the storage container (2) and are specifically designed to be able to dissipate the operation-related waste heat of individual components, such as of a compressor, to the heat transfer medium surrounding them.

15. Hot and cold temperature supply device (1) according to one of the preceding claims, **characterized in that** a change of functions by a switching device (32) between the external heat exchangers (17), via which heat is transported into the storage container (2) or out of the storage container (2), results in one and the same heat exchanger (17) alternately assuming a cooling or heating function.

16. Hot and cold temperature supply device (1) according to one of the preceding claims, **characterized in that** the installation of heating pipes together with cooling cycle processes, as variants of the cycle process systems (3), causes a controlling function inside the storage container by a heat transport through a heating pipe, wherein the heat transport through a heating pipe can be effected against the temperatures rising due to temperature-related density differences.

**Revendications**

1. Dispositif de fourniture de chaleur et de froid (1) comprenant un réservoir de stockage (2) et comprenant un fluide caloporteur (13) qui est disposé dans un espace intérieur du réservoir de stockage (2), une quelconque installation en circuit fermé (3) étant en plus disposée à l'intérieur du réservoir de stockage (2), laquelle installation fonctionne dans son circuit avec une substance de travail, le fluide caloporteur (13) présentant dans une partie inférieure de l'espace intérieur le plus souvent une température plus basse que dans une partie de l'espace intérieur, disposée au-dessus, tous les composants de l'installation en circuit fermé (3), lesquels contiennent la substance de travail, étant disposés dans l'espace intérieur du réservoir de stockage (2), et le réservoir de stockage (2) étant adapté à la substance de travail de manière à ce qu'en cas d'une détérioration des composants transportant la substance de travail, la substance de travail s'échappant de l'installation en circuit fermé (3) reste à l'intérieur du réservoir de stockage (2) de manière sûre, **caractérisé en ce que** le fluide caloporteur (13) présente des constituants destinés à lier ou transformer la substance de travail et **en ce que** la proportion du fluide caloporteur (13) est mesurée, en tant que partenaire de réaction de la substance de travail respective, de manière à ce que la substance de travail contenue dans l'installation en circuit fermé puisse être complètement liée ou transformée par les constituants.

2. Dispositif de fourniture de chaleur et de froid (1) selon la revendication 1, **caractérisé en ce qu'**une résistance à la compression du réservoir de stockage (2) est adaptée à la substance de travail utilisée.

3. Dispositif de fourniture de chaleur et de froid (1) selon la revendication 1 ou 2, **caractérisé en ce qu'**une hauteur de remplissage d'un remplissage du réservoir de stockage (2) avec le fluide caloporteur (13) est adaptée à la substance de travail.

4. Dispositif de fourniture de chaleur et de froid (1) selon l'une quelconque des revendications précédentes, **caractérisé en ce que** les composants de l'installation en circuit fermé (3) disposés dans l'espace intérieur sont entourés en partie ou complètement par le fluide caloporteur (13).

5. Dispositif de fourniture de chaleur et de froid (1) selon l'une quelconque des revendications précédentes, **caractérisé en ce que** la substance de travail est de l'ammoniac ou du dioxyde de carbone ou de l'hydrocarbure pur.

6. Dispositif de fourniture de chaleur et de froid (1) selon l'une quelconque des revendications précédentes, **caractérisé en ce que** le fluide caloporteur (13) est au moins constitué en partie d'au moins une matière accumulant la chaleur latente.

7. Dispositif de fourniture de chaleur et de froid (1) selon l'une quelconque des revendications précédentes, **caractérisé en ce que** le fluide caloporteur (13) est présent dans une phase liquide ou une phase solide.

8. Dispositif de fourniture de chaleur et de froid (1) selon l'une quelconque des revendications précédentes, **caractérisé en ce que** le fluide caloporteur (13) est un mélange d'eau, de glycol et de paraffine.

9. Dispositif de fourniture de chaleur et de froid (1) selon l'une quelconque des revendications précédentes, **caractérisé en ce qu'**un constituant est ajouté au fluide caloporteur (13), lequel constituant, avec la substance de travail respective, entraîne une transformation de la substance.

10. Dispositif de fourniture de chaleur et de froid (1) selon l'une quelconque des revendications précédentes, **caractérisé en ce qu'**une proportion du fluide caloporteur (13) contient en plus ou uniquement une matière supplémentaire d'accumulation latente, laquelle, en fonctionnement selon l'emploi prévu du réservoir de stockage (2) avec l'installation en circuit fermé (3), n'effectue pas de changement de phase, un changement de phase et une absorption d'énergie ayant seulement lieu en raison d'une arrivée de chaleur supplémentaire par apport de chaleur ou par des réactions exothermes de la substance de travail avec des substances de réaction provenant du fluide caloporteur (13) dans cette matière d'accumulation latente, et évitant une surchauffe du réservoir de stockage.

11. Dispositif de fourniture de chaleur et de froid (1) selon l'une quelconque des revendications précédentes, **caractérisé en ce qu'**au moins deux installations en circuit fermé (3) sont disposées dans le réservoir de stockage (2).

12. Dispositif de fourniture de chaleur et de froid (1) selon l'une quelconque des revendications précédentes, **caractérisé en ce que** le réservoir de stockage (2) peut être exploité en tant qu'accumulateur de chaleur et distributeur de chaleur indépendamment du fonctionnement des installations en circuit fermé (3).

**13.** Dispositif de fourniture de chaleur et de froid (1) selon l'une quelconque des revendications précédentes, **caractérisé en ce que** le réservoir de stockage (2) présente au moins un dispositif de séparation (42), le dispositif de séparation (42) entraînant une séparation largement ou complètement thermique et matérielle entre les chambres de stockage (43, 44) du réservoir de stockage (2).

**14.** Dispositif de fourniture de chaleur et de froid (1) selon l'une quelconque des revendications précédentes, **caractérisé en ce que** des conduites et des composants de l'installation en circuit fermé (3) sont disposés dans différentes positions verticales de température différente du réservoir de stockage (2) et sont conçus de manière particulière pour pouvoir fournir la chaleur dissipée, due au fonctionnement, de chacun des composants, tels que celle d'un compresseur, au fluide caloporteur (13) entourant ceux-ci.

**15.** Dispositif de fourniture de chaleur et de froid (1) selon l'une quelconque des revendications précédentes, **caractérisé en ce qu'**un changement de fonction au moyen d'un dispositif de commutation (32) entre des échangeurs de chaleur (17) externes, par l'intermédiaire desquels la chaleur est transportée dans le réservoir de stockage (2) ou hors du réservoir de stockage (2), a pour conséquence qu'un seul et même échangeur de chaleur et de froid (17) prend en alternance une fonction de refroidissement ou une fonction de chauffage.

**16.** Dispositif de fourniture de chaleur et de froid (1) selon l'une quelconque des revendications précédentes, **caractérisé en ce que** le montage de tubes de chaleur en relation avec des circuits de froid, en tant que variantes des installations en circuit fermé (3), à l'intérieur du réservoir de stockage entraîne une fonction de commande par transport de chaleur dans le fluide caloporteur (13), le transport de chaleur à travers un tube de chaleur inversement aux températures croissantes pouvant avoir lieu en raison des différences de densité dépendantes de la température.

# Fig. 1

## Fig. 2a

## Fig. 2b

**Fig. 3**

Fig. 4a

Fig. 4b

# Fig. 5

Fig. 6

**IN DER BESCHREIBUNG AUFGEFÜHRTE DOKUMENTE**

**In der Beschreibung aufgeführte Patentdokumente**

- DE 2741507 A1